# FASCICULE DE BREVET EUROPEEN

(11) **EP 1 881 180 B1**
(45) Date de publication et mention de la délivrance du brevet: **03.01.2018**
(21) Numéro de dépôt: 07290779.3
(22) Date de dépôt: 22.06.2007
(51) Int. Cl.: F01D 25/12, F02C 7/18, F23R 3/26, F02C 3/08, F02C 3/14, F01D 5/08

(54) **Système de ventilation de paroi de chambre de combustion**
Wandbelüftungssystem für die Brennkammer
System for ventilating a wall of a combustion chamber

(30) Priorité: 19.07.2006 FR 0606542
(43) Date de publication de la demande: 23.01.2008
(73) Titulaire: SNECMA, 75015 Paris (FR)
(72) Inventeur: Brunet, Antoine Robert Alain, 77550 Moissy-Cramayel (FR); Commaret, Patrice André, 77950 Rubelles (FR); Hernandez, Didier Hippolyte, 77720 Quiers (FR); Locatelli, David, 01170 Gex (FR)
(74) Mandataire: Ramey, Daniel

(56) Documents cités:
- WO-A-03/098020
- GB-A- 2 093 532
- US-A1- 5 555 721
- US-A1- 2003 167 775

## Description

La présente invention concerne un système de ventilation de paroi de chambre de combustion dans une turbomachine comportant un compresseur centrifuge et un diffuseur alimentant en air une chambre annulaire de combustion.

De façon classique, la chambre annulaire de combustion de la turbomachine est située dans un espace annulaire délimité par un carter externe, ce carter supportant le diffuseur qui comporte un flasque annulaire qui s'étend en aval et le long du rotor ou rouet du compresseur centrifuge.

L'air sortant du diffuseur est destiné, principalement, à pénétrer dans la chambre de combustion et à être mélangé à du carburant puis brûlé, et secondairement, à contourner la chambre de combustion et à alimenter des orifices primaires et de dilution de la chambre et des moyens d'injection d'air de ventilation et/ou de refroidissement d'une turbine située en aval de la chambre de combustion (voir par exemple les documents WO 03/098020 et US-A-5,555,721).

L'air qui contourne la chambre en passant entre celle-ci et le flasque du diffuseur n'est pas guidé et est soumis à des turbulences, à des décollements de flux et à des pertes de charge importantes qui réduisent les performances de la turbomachine.

Une petite partie du débit d'air sortant du compresseur ne passe pas dans le diffuseur et s'écoule dans un passage annulaire radial formé entre le rouet du compresseur et le flasque du diffuseur, cet air étant relativement chaud en raison de son cisaillement visqueux entre le rouet et le flasque du diffuseur.

L'invention a notamment pour but d'améliorer les performances de ces systèmes de ventilation et d'éviter les inconvénients de la technique antérieure.

Elle propose à cet effet un système de ventilation de paroi de chambre de combustion dans une turbomachine comprenant un compresseur centrifuge alimentant par un diffuseur une chambre annulaire de combustion, le diffuseur comportant un flasque annulaire à section sensiblement en L qui s'étend en aval et le long du rouet du compresseur centrifuge pour former un passage annulaire radial d'écoulement d'air communiquant à son extrémité radialement externe avec la sortie du compresseur, caractérisé en ce qu'un caisson annulaire est agencé radialement entre la chambre de combustion et le flasque du diffuseur et s'étend axialement du diffuseur jusqu'au voisinage de la sortie de la chambre de combustion et de l'extrémité aval du flasque du diffuseur, ce caisson comportant une paroi radialement externe de révolution pour le guidage, le long d'une paroi radialement interne de la chambre de combustion, d'un flux d'air sortant du diffuseur, et comportant une paroi radialement interne de révolution délimitant, avec le flasque du diffuseur, une voie annulaire de passage d'air sortant du diffuseur.

Le caisson selon l'invention assure un écoulement d'air stable, sans décollement et avec des pertes de charge minimales le long de la paroi interne de la chambre de combustion, ce qui permet une alimentation optimale des moyens d'injection d'air et des orifices primaires et de dilution de la paroi interne de la chambre.

L'air qui circule entre le caisson selon l'invention et le flasque du diffuseur assure en outre le refroidissement et la ventilation du flasque du diffuseur qui peut ainsi absorber une partie de la chaleur générée par le cisaillement de l'air sortant du compresseur et passant entre le rouet du compresseur et le flasque du diffuseur.

Préférentiellement, la paroi radialement externe du caisson s'étend sensiblement parallèlement à la paroi interne de la chambre de combustion, et la paroi radialement interne du caisson s'étend sensiblement parallèlement au flasque du diffuseur.

Les parois de révolution du caisson comprennent avantageusement des orifices d'équilibrage de pression pour limiter leurs déformations en fonctionnement.

Dans un mode de réalisation préféré de l'invention, le caisson comprend des rebords cylindriques amont et aval centrés et supportés sur le diffuseur et sur une virole annulaire de la paroi interne de la chambre de combustion, respectivement.

Les rebords du caisson peuvent être fixés par frettage sur le diffuseur et sur la virole annulaire de la paroi interne de la chambre de combustion, respectivement.

Le rebord cylindrique amont du caisson est avantageusement crénelé et forme des orifices alimentant en air sortant du diffuseur la voie de passage d'air le long du flasque du diffuseur.

Le caisson est avantageusement formé de deux demi-coquilles juxtaposées transversalement, ce qui facilite le montage du caisson dans la turbomachine. Une bague cylindrique peut être engagée axialement et fixée par exemple par soudage sur le rebord cylindrique aval du caisson pour maintenir assemblées les deux demi-coquilles.

L'invention concerne encore une turbomachine, telle qu'un turboréacteur ou un turbopropulseur d'avion, caractérisée en ce qu'elle comprend un système de ventilation tel que décrit ci-dessus.

L'invention concerne enfin un caisson pour un système de ventilation de paroi de chambre de combustion dans une turbomachine, caractérisé en ce qu'il comprend deux parois de révolution coaxiales s'étendant l'une à l'intérieur de l'autre, les extrémités amont de ces parois étant reliées l'une à l'autre par un rebord cylindrique axial orienté vers l'amont, et les extrémités aval de ces parois étant reliées l'une à l'autre par un rebord cylindrique axial orienté vers l'aval.

Selon un mode de réalisation de l'invention, la paroi radialement externe du caisson est sensiblement tronconique, et la paroi radialement interne du caisson a une section sensiblement en U. Ces parois comprennent avantageusement des orifices pour l'équilibrage de pression en fonctionnement.

Pour faciliter son montage, le caisson est formé d'au moins deux demi-coquilles juxtaposées transversalement et qui peuvent être maintenues assemblées par une bague cylindrique engagée axialement et fixée par exemple par soudage sur le rebord cylindrique aval du caisson.

L'invention sera mieux comprise et d'autres détails, caractéristiques et avantages de la présente invention apparaîtront à la lecture de la description suivante faite à titre d'exemple non limitatif et en référence aux dessins annexés, dans lesquels :
- la figure 1 est une vue schématique partielle en coupe axiale d'un système de ventilation selon l'invention ;
- la figure 2 est une vue schématique en perspective éclatée du caisson annulaire du système de la figure 1, vu de l'aval.

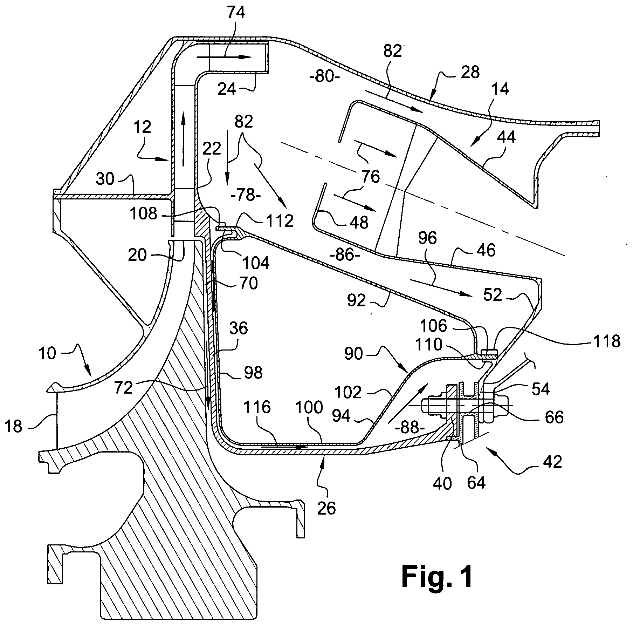

On se réfère d'abord à la figure 1 qui représente une partie d'une turbomachine, telle qu'un turboréacteur ou un turbopropulseur d'aéronef, comportant d'amont en aval, dans le sens de l'écoulement des gaz à l'intérieur de la turbomachine, un compresseur centrifuge 10, un diffuseur 12 et une chambre de combustion 14.

L'entrée 18 du compresseur centrifuge 10 est orientée vers l'amont, sensiblement parallèlement à l'axe de la turbomachine, et sa sortie 20 est orientée vers l'extérieur, sensiblement perpendiculairement à l'axe de la turbomachine, et est alignée avec une partie radiale 22 du diffuseur 12. Le diffuseur est de forme générale coudée à 90° et comprend une partie axiale de sortie 24 raccordée à la partie radiale 22 et qui s'étend le long du carter externe 28 et débouche à son extrémité aval radialement à l'extérieur de l'entrée de la chambre de combustion 14.

Le diffuseur 12 est supporté par le carter externe 28 qui entoure extérieurement le compresseur 10, le diffuseur 12 et la chambre de combustion 14.

Le diffuseur 12 comprend un voile amont 30 sensiblement cylindrique fixé par des moyens appropriés du type vis-écrou au carter externe 28.

Le diffuseur 12 comprend également un flasque annulaire aval 26 à section semblablement en L qui comprend une partie radiale amont 36 qui s'étend vers l'intérieur depuis l'entrée 22 du diffuseur, et une partie aval sensiblement cylindrique qui s'étend vers l'aval depuis l'extrémité radialement interne de la partie radiale 36 et comporte à son extrémité aval une bride annulaire 40 de fixation sur des moyens 42 d'injection d'air de ventilation et/ou refroidissement dans des composants situés en aval de la chambre de combustion 14.

La partie radiale 36 du flasque du diffuseur s'étend en aval du rotor du compresseur centrifuge, aussi appelé « rouet », le long et à faible distance de celui-ci pour former un passage annulaire radial 70 communiquant à son extrémité radialement externe avec la sortie 20 du compresseur centrifuge.

La chambre de combustion 14 comporte deux parois de révolution coaxiales 44, 46 s'étendant l'une à l'intérieur de l'autre et reliées à leurs extrémités amont à une paroi 48 de fond de chambre, ces parois 44, 46 et 48 délimitant entre elles une enceinte annulaire dans laquelle du carburant est amené par des injecteurs (non représentés).

La paroi radialement externe 44 de la chambre est fixée à son extrémité aval au carter externe 28, et la paroi radialement interne 46 est reliée à son extrémité aval à une virole tronconique 52 qui comporte à son extrémité radialement interne une bride annulaire interne 54 de fixation sur les moyens 42 d'injection d'air précités.

Les moyens 42 d'injection d'air comprennent un conduit annulaire 64 qui débouche à son extrémité amont radialement vers l'extérieur, en aval de la bride 40 du flasque et en amont de la bride 54 de la virole 52, respectivement, et à son extrémité aval axialement vers l'aval. La partie d'extrémité amont des moyens 42 comprend des orifices 66 de passage de moyens du type vis-écrou qui s'étendent à travers des orifices correspondants des brides 40 et 54.

Une petite partie du débit d'air sortant du compresseur centrifuge 10 passe dans le passage radial 70 formé entre le rouet du compresseur et le flasque 26 du diffuseur. Cet air (flèche 72) est soumis à des forces de cisaillement importantes provoquées par la rotation du rouet à proximité du flasque 26 du diffuseur, ce qui engendre une élévation de la température de l'air et un échauffement du rouet et du flasque.

L'air sortant du diffuseur 12 (flèche 74) alimente, pour partie, la chambre de combustion 14 (flèches 76), et pour partie, des veines annulaires interne 78 et externe 80 de contournement de la chambre de combustion 14 (flèches 82).

La veine externe 80 est formée entre le carter externe 28 et la paroi externe 44 de la chambre, et l'air qui passe dans cette voie est utilisé pour le refroidissement et/ou la ventilation de composants, non représentés, situés en aval de cette chambre.

La veine interne 78 est formée entre la paroi 48 de fond de chambre et la partie radiale 22 du diffuseur, et l'air qui passe dans cette veine se partage en un débit qui alimente les moyens 42 d'injection d'air et en un débit qui passe à travers des orifices primaires et de dilution (non représentés) de la chambre.

Dans la technique antérieure, l'air qui circulait dans la veine interne 78 n'était pas guidé et était soumis à des turbulences, à des décollements de flux et à des pertes de charge importantes réduisant les performances de la turbomachine.

Le système selon l'invention permet de supprimer ces inconvénients en créant des voies 86, 88 d'écoulement d'air stable entre le flasque 26 du diffuseur et la paroi interne 46 de la chambre au moyen d'un caisson annulaire agencé radialement entre le flasque 26 et la chambre de combustion 14.

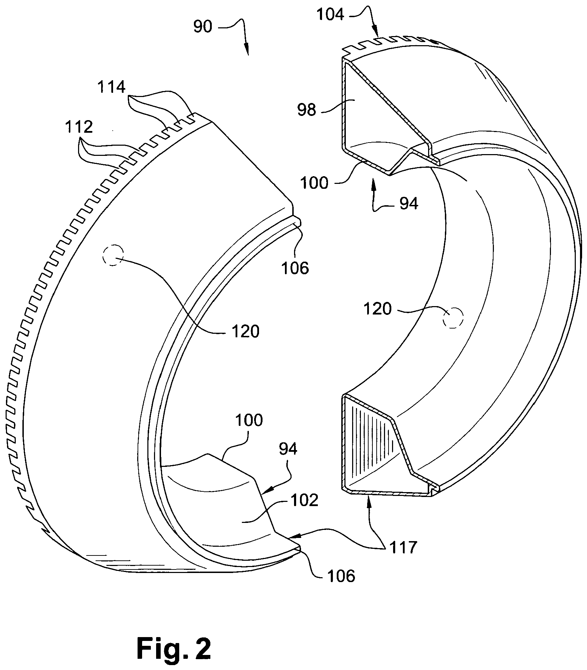

Dans l'exemple représenté au figures 1 et 2, le caisson annulaire 90 comprend une paroi radialement externe de révolution 92 sensiblement tronconique qui s'étend en aval vers l'intérieur, et une paroi radialement interne de révolution 94 à section sensiblement en U.

La paroi externe 92 s'étend sensiblement parallèlement à la paroi interne 46 de la chambre et à distance de celle-ci pour le guidage d'une partie 96 du débit d'air 82 qui contourne la chambre par l'intérieur. L'air dans cette voie 86 est canalisé par la paroi externe 92 du caisson et la paroi 46 de la chambre, ce qui permet d'éviter les décollements et de limiter les turbulences et les pertes de charge.

La paroi interne 94 en U du caisson comporte une partie annulaire amont 98 qui est parallèle et à faible distance de la partie radiale 36 du flasque et qui est reliée par son extrémité radialement externe, avec l'extrémité amont de la paroi externe 92, à un rebord cylindrique 104 orienté vers l'amont. La paroi 94 comporte également une partie cylindrique intermédiaire 100 qui s'étend autour et à faible distance du flasque 26, et une partie annulaire aval 102 sensiblement tronconique qui s'étend vers l'aval et vers l'extérieur autour des moyens 42 d'injection d'air, et qui est reliée par son extrémité aval, avec l'extrémité aval de la paroi externe 92, à un rebord cylindrique 106 orienté vers l'aval.

Le rebord amont 104 du caisson est engagé depuis l'aval dans une rainure annulaire 108 débouchant vers l'aval et formée à l'extrémité radialement interne de l'entrée 22 du diffuseur, et le rebord aval 106 est monté sur un rebord cylindrique 110 orienté vers l'amont de la virole 52 de la chambre. La rainure 108 et le rebord 110 permettent de supporter et de centrer le caisson, comme cela sera décrit plus en détail dans ce qui suit.

Le rebord amont 104 du caisson est du type crénelé et comporte des encoches ou échancrures 112 alternées avec des parties pleines 114 et régulièrement réparties autour de l'axe du caisson (figure 2). Les encoches 112 forment des orifices de passage d'air et leur dimension axiale est supérieure à la dimension axiale de la rainure 108 du diffuseur de manière à ce qu'une partie 116 du débit d'air 82 contournant la chambre par l'intérieur puisse passer à travers ces encoches et circuler entre la paroi interne 94 du caisson et le flasque 26 du diffuseur pour les refroidir et alimenter ensuite les moyens d'injection 42.

Cet air 116 permet notamment de ventiler et de refroidir le flasque 26 du diffuseur qui est exposé en fonctionnement à des élévations de température importantes de l'air 72 cisaillé entre le rouet du compresseur et le flasque 26. Ce flasque 26 peut ainsi absorber une grande partie de la chaleur générée par ce cisaillement et limite de cette manière l'échauffement du rouet du compresseur et augmente sa durée de vie.

Le caisson 90 est formé d'au moins deux demi-coquilles 117 (figure 2) qui sont juxtaposées transversalement et maintenues par un anneau cylindrique 118 engagé sur le rebord cylindrique aval 106 du caisson et fixé par exemple par soudage sur ce rebord (figure 1).

Ce caisson 90 est monté dans la turbomachine de la manière suivante :
Après que le diffuseur 12 ait été monté sur le compresseur centrifuge 10 et avant l'assemblage des moyens d'injection 42 et de la chambre de combustion 14 sur le flasque 26 du diffuseur, les deux demi-coquilles 117 séparées l'une de l'autre sont amenées transversalement de part et d'autre du flasque 26 et juxtaposées, puis l'anneau 118 est engagé axialement et fixé sur le rebord aval 106 du caisson. Le rebord 104 du caisson 90 est ensuite emboîté dans la rainure 108 du diffuseur. Les moyens d'injection 42 sont assemblés sur la bride 40 du flasque du diffuseur, puis la chambre est à son tour déplacée vers l'amont et fixée par sa virole 52 sur les moyens d'injection 42, le rebord amont 110 de cette virole 52 venant s'engager radialement à l'intérieur du rebord aval 106 du caisson pour son centrage.

Le caisson 90 peut être démonté en éliminant l'anneau 118 et en répétant les opérations précitées en sens inverse.

Le caisson 90 est fixé par frettage à chaud en fonctionnement dans la rainure 108 et sur le rebord 110. Pour cela, les rebords 104, 106 du caisson ont, à température ambiante, des diamètres internes inférieurs aux diamètres interne de la rainure 108 et externe du rebord 110, respectivement. Le frettage du caisson dans la rainure 108 et sur le rebord 110 est réalisé par dilatation thermique en fonctionnement.

Les parois de révolution 92 et 94 du caisson comprennent préférentiellement des orifices traversants (représentés en traits pointillés en 120 en figure 2) pour équilibrer les pressions à l'intérieur et à l'extérieur du caisson.

## Revendications

1. Turbomachine comprenant un compresseur centrifuge (10) alimentant par un diffuseur (12) une chambre annulaire (14) de combustion, et un système de ventilation de paroi de la chambre de combustion, le diffuseur comportant un flasque annulaire (26) à section sensiblement en L qui s'étend en aval et le long du rouet du compresseur centrifuge pour former un passage annulaire radial d'écoulement d'air communiquant à son extrémité radialement externe avec la sortie du compresseur, **caractérisée en ce qu'**un caisson annulaire (90) est agencé radialement entre la chambre de combustion et le flasque du diffuseur et s'étend axialement du diffuseur jusqu'au voisinage de la sortie de la chambre de combustion et de l'extrémité aval du flasque du diffuseur, ce caisson comportant une paroi radialement externe (92) de révolution pour le guidage, le long d'une paroi radialement interne (46) de la chambre de combustion, d'un flux d'air sortant de l'extrémité aval de la partie axiale de sortie (24) du diffuseur, et comportant une paroi radialement interne (94) de révolution délimitant, avec le flasque du diffuseur, une voie annulaire (88) de passage d'air sortant de l'extrémité aval de la partie axiale de sortie (24) du diffuseur.

2. Turbomachine selon la revendication 1, **caractérisée en ce que** le caisson (90) est formé de deux demi-coquilles assemblées transversalement l'une à l'autre.

3. Turbomachine selon la revendication 1 ou 2, **caractérisée en ce que** la paroi radialement externe (92) du caisson s'étend sensiblement parallèlement à la paroi interne (46) de la chambre de combustion.

4. Turbomachine selon l'une des revendications précédentes, **caractérisée en ce que** la paroi radialement interne (94) du caisson s'étend sensiblement parallèlement au flasque (26) du diffuseur.

5. Turbomachine selon l'une des revendications précédentes, **caractérisée en ce que** les parois de révolution (92, 94) du caisson comprennent des orifices (120) d'équilibrage de pression.

6. Turbomachine selon l'une des revendications précédentes, **caractérisée en ce que** le caisson comprend des rebords cylindriques amont (104) et aval (106) centrés et supportés sur le diffuseur (12) et sur une virole annulaire (52) de la paroi interne (46) de la chambre de combustion, respectivement.

7. Turbomachine selon la revendication 6, **caractérisée en ce que** les rebords (104, 106) du caisson sont fixés par frettage sur le diffuseur (12) et sur la virole annulaire (52) de la paroi interne (46) de la chambre de combustion, respectivement.

8. Turbomachine selon la revendication 6 ou 7, **caractérisée en ce que** le rebord cylindrique amont (104) du caisson est crénelé et forme des orifices alimentant en air sortant du diffuseur la voie (88) de passage d'air le long du flasque (26) du diffuseur.

9. Turbomachine selon l'une des revendications 6 à 8, **caractérisée en ce que** le caisson est fixé par une bague cylindrique (118) engagée axialement et fixée par exemple par soudage sur le rebord cylindrique aval (106) du caisson.

10. Caisson annulaire pour une turbomachine selon l'une des revendications précédentes, **caractérisé en ce qu'**il comprend deux parois de révolution coaxiales (92, 94) s'étendant l'une à l'intérieur de l'autre, les extrémités amont de ces parois étant reliées l'une à l'autre par un rebord cylindrique axial (104) orienté vers l'amont, et les extrémités aval de ces parois étant reliées l'une à l'autre par un rebord cylindrique axial (106) orienté vers l'aval.

11. Caisson selon la revendication 10, **caractérisé en ce que** la paroi radialement externe (92) est sensiblement tronconique, et la paroi radialement interne (94) a une section sensiblement en U.

12. Caisson selon la revendication 10 ou 11, **caractérisé en ce que** les parois de révolution (92, 94) comprennent des orifices (120).

13. Caisson selon l'une des revendications 10 à 12, **caractérisé en ce qu'**il est formé de deux demi-coquilles (117) juxtaposées transversalement.

## Patentansprüche

1. Turbomaschine mit einem Zentrifugalverdichter (10), der über einen Diffusor (12) eine ringförmige Brennkammer (14) versorgt, und mit einem Belüftungssystem für die Wand der Brennkammer, wobei der Diffusor einen ringförmigen Flansch (26) mit im Wesentlichen L-förmigem Querschnitt enthält, der sich stromabwärts und entlang des Spinnrad des Zentrifugalverdichters erstreckt, um einen radialen, ringförmigen Luftströmungsdurchgang zu bilden, der an seinem radial äußeren Ende mit dem Auslass des Verdichters in Verbindung ist,
**dadurch gekennzeichnet,**
**dass** ein ringförmiger Kasten (90) radial zwischen der Brennkammer und dem Flansch des Diffusors angeordnet ist und sich axial vom Diffusor bis in die Nähe von dem Auslass der Brennkammer und dem stromabwärtigen Ende des Flansches des Diffusors erstreckt, wobei dieser Kasten eine radial äußere Umlaufwand (92) zum Leiten eines am stromabwärtigen Ende des axialen Auslassteils (24) des Diffusors austretenden Luftstroms entlang einer radial inneren Wand (46) der Brennkammer und eine radial innere Umlaufwand (94) enthält, die mit dem Flansch des Diffusors einen ringförmigen Luftdurchtrittsweg (88) für die am stromabwärtigen Ende des axialen Auslassteils (24) des Diffusors austretende Luft begrenzt.

2. Turbomachine nach Anspruch 1, **dadurch gekennzeichnet, dass** der Kasten (90) aus zwei Halbschalen gebildet ist, die quer zueinander zusammengefügt sind.

3. Turbomachine nach Anspruch 1 oder 2, **dadurch gekennzeichnet, dass** die radial äußere Wand (92) des Kastens sich im Wesentlichen parallel zur inneren Wand (46) der Brennkammer erstreckt.

4. Turbomaschine nach einem der vorangehenden Ansprüche, **dadurch gekennzeichnet, dass** die radial innere Wand (94) des Kastens sich im Wesentlichen parallel zum Flansch (26) des Diffusors erstreckt.

5. Turbomaschine nach einem der vorangehenden Ansprüche, **dadurch gekennzeichnet, dass** die Umlaufwände (92, 94) des Kastens Öffnungen (120) zum Druckausgleich aufweisen.

6. Turbomaschine nach einem der vorangehenden Ansprüche, **dadurch gekennzeichnet, dass** der Kasten eine stromaufwärtige (104) und eine stromabwärtige (106) zylindrische Randleisten enthält, die auf den Diffusor (12) bzw. auf einen Mantelring (52) der inneren Wand (46) der Brennkammer zentriert sind und von diesen getragen werden.

7. Turbomaschine nach Anspruch 6, **dadurch gekennzeichnet, dass** die Randleisten (104, 106) des Kastens durch Aufschrumpfen an den Diffusor (12) bzw. an den Mantelring (52) der inneren Wand (46) der Brennkammer befestigt sind.

8. Turbomachine nach Anspruch 6 oder 7, **dadurch gekennzeichnet, dass** die stromaufwärtige zylindrische Randleiste (104) des Kastens gezackt ausgebildet ist und Öffnungen bildet, welche den Luftdurchtrittsweg (88) entlang des Flansches (26) des Diffusors mit aus dem Diffusor austretender Luft versorgen.

9. Turbomaschine nach einem der Ansprüche 6 bis 8, **dadurch gekennzeichnet, dass** der Kasten über einen zylindrischen Ring (118) befestigt ist, der axial an der stromabwärtigen zylindrischen Randleiste (106) des Katens eingreift und beispielsweise durch Verschweißen daran befestigt ist.

10. Ringförmiger Kasten für eine Turbomaschine nach einem der vorangehenden Ansprüche, **dadurch gekennzeichnet, dass** er zwei koaxial verlaufende Umlaufwände (92, 94) aufweist, die sich ineinander erstrecken, wobei die stromaufwärtigen Enden dieser Wände über eine axial verlaufende zylindrische Randleiste (104) miteinander verbunden sind, die stromaufwärts gerichtet ist, und wobei die stromabwärtigen Enden dieser Wände über eine axial verlaufende zylindrische Randleiste (106) miteinander verbunden sind, die stromabwärts gerichtet ist.

11. Kasten nach Anspruch 10, **dadurch gekennzeichnet, dass** die radial äußere Wand (92) im Wesentlichen kegelstumpfförmig ist und die radial innere Wand (94) einen im Wesentlichen U-förmigen Querschnitt hat.

12. Kasten nach Anspruch 10 oder 11, **dadurch gekennzeichnet, dass** die Umlaufwände (92, 94) Öffnungen (120) aufweisen.

13. Kasten nach einem der Ansprüche 10 bis 12, **dadurch gekennzeichnet, dass** er aus zwei Halbschalen (117) gebildet ist, die quer nebeneinandergeordnet sind.

## Claims

1. A turbomachine comprising a centrifugal compressor (10) supplying, via a diffuser (12), an annular combustion chamber (14), and a system for ventilating a combustion chamber wall, the diffuser comprising an annular flange (26) with a substantially L-shaped section that extends downstream and along the impeller of the centrifugal compressor in order to form a radial annular passageway for the flow of air communicating at its radially external end with the outlet of the compressor, **characterized in that** an annular case (90) is arranged radially between the combustion chamber and the flange of the diffuser and extends axially from the diffuser to the vicinity of the outlet of the combustion chamber and of the downstream end of the flange of the diffuser, this case comprising a radially external wall (92) of revolution for the guidance, along a radially internal wall (46) of the combustion chamber, of an air flow coming out of the downstream end of the output axial part (24) of the diffuser, and comprising a radially internal wall (94) of revolution delimiting, with the flange of the diffuser, an annular channel (88) for air coming out of the downstream end of the output axial part (24) diffuser to pass through.

2. The turbomachine as claimed in claim 1, **characterized in that** the case (90) is formed of two half-shells assembled transversely one with another.

3. The turbomachine as claimed in claim 1 or 2, **characterized in that** the radially external wall (92) of the case extends substantially parallel to the internal wall (46) of the combustion chamber.

4. The turbomachine as claimed in one of the preceding claims, **characterized in that** the radially internal wall (94) of the case extends substantially parallel to the flange (26) of the diffuser.

5. The turbomachine as claimed in one of the preceding claims, **characterized in that** the walls of revolution of the case comprise pressure-balancing orifices (120).

6. The turbomachine as claimed in one of the preceding claims, **characterized in that** the case comprises an upstream cylindrical rim (104) and a downstream cylindrical rim (106) centered and supported on the diffuser (12) and on an annular shroud (52) of the internal wall (46) of the combustion chamber, respectively.

7. The turbomachine as claimed in claim 6, **characterized in that** the rims (104, 106) of the case are attached by shrink-fitting to the diffuser (12) and to the annular shroud (52) of the internal wall (46) of the combustion chamber, respectively.

8. The turbomachine as claimed in claim 6 or 7, **characterized in that** the upstream cylindrical rim (104) of the case is crenellated and forms orifices supplying, with air coming out of the diffuser, the air passageway channel (88) along the flange of the diffuser.

9. The turbomachine as claimed in one of claims 6 to 8, **characterized in that** the case is attached by a cylindrical ring (118) engaged axially and attached for example by welding to the downstream cylindrical rim (106) of the case.

10. An annular case for a ventilation system according to one of the preceding claims, which comprises two coaxial walls (92, 94) of revolution extending one inside the other, the upstream ends of these walls being connected to one another by an axial cylindrical rim (104) oriented upstream, and the downstream ends of these walls being connected to one another by an axial cylindrical rim (106) oriented downstream.

11. The case as claimed in claim 10, **characterized in that** the radially external wall (92) is substantially frustoconical, and the radially internal wall (94) has a substantially U-shaped section.

12. The case as claimed in claim 10 or 11, **characterized in that** the walls (92, 94) of revolution comprise orifices (120).

13. The case as claimed in one of claims 10 to 12, which is formed of two half-shells (117) juxtaposed transversely.
